Europäisches Patentamt

(19) European Patent Office    (11) Publication number: **0 057 982**

Office européen des brevets                                **B1**

(12)                    **EUROPEAN PATENT SPECIFICATION**

(45) Date of publication of patent specification: **11.12.85**    (51) Int. Cl.⁴: **H 04 R 17/00, G 01 H 11/00**

(21) Application number: **82300230.8**

(22) Date of filing: **18.01.82**

(54) **Device sensitive to pressure waves.**

(30) Priority: **06.02.81 GB 8103464**

(43) Date of publication of application:
**18.08.82 Bulletin 82/33**

(45) Publication of the grant of the patent:
**11.12.85 Bulletin 85/50**

(84) Designated Contracting States:
**DE FR GB NL SE**

(56) References cited:
**EP-A-0 056 549**
**AU-A- 494 323**
**DE-A-2 811 783**
**FR-A-2 282 627**
**US-A-4 041 446**

**JOURNAL OF THE ACOUSTICAL SOCIETY OF
AMERICA, vol. 63, no. 5, May 1978, pages
1396-1401, New York (USA); T.D. SULLIVAN et
al.: "Piezoelectric polymer flexural disk
hydrophone".**

(73) Proprietor: **EMI Limited**
**Blyth Road**
**Hayes Middlesex, UB3 1BP (GB)**

(72) Inventor: **Holt, Lyn**
**18, Brill Close**
**Maidenhead Berkshire (GB)**

(74) Representative: **Marsh, Robin Geoffrey**
**Thorn EMI Patents Limited The Quadrangle**
**Westmount Centre Uxbridge Road**
**Hayes Middlesex, UB4 0HB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a device sensitive to pressure waves.

An article in "Journal of the Acoustical Society of America" vol. 63, No. 5, May 1978, p 1396—1401 describes a piezoelectric polymer hydrophone. This device includes a plurality of sheets of a piezoelectric polymer (e.g. pvdf) which are supported so as to flex in response to incident pressure waves. Suitable electrical connections are made to the sheets and differences of voltage, developed across the sheets as a result of such flexure, are detected.

A device of this kind can be unsatisfactory in some operational circumstances since it may be sensitive to unwanted effects e.g. movement of the device through water.

It is an object of the present invention to provide a pressure sensitive device wherein the above-described problem is at least alleviated.

Accordingly there is provided a device sensitive to pressure waves wherein first and second pressure sensitive members, each comprising a sheet of polyvinylidene fluoride (pvdf), are supported, in spaced apart relationship, the members being poled in a direction normal to their major surfaces and in the same sense relative to their inwardly facing surfaces; electrical connections are made to respective surfaces of the members and associated circuitry is provided to monitor differences of voltage developed across the major surfaces in response to incident pressure waves, characterised in that the first and second pressure sensitive members are supported on a common substrate of an electrically insulative material, each said sheet of pvdf is at least 100 μm thick, and said electrical connections are effective to cancel substantially differences of voltage developed across said major surfaces as a result of the members flexing and to allow differences of voltage otherwise developed across the major surfaces as a result of pressure waves incident on the members, to be detected.

In order that the invention may be carried readily into effect an embodiment thereof is now described by way of example only by reference to the accompanying drawings in which:

Figure 1 is an exploded view of a pressure sensitive device in accordance with the invention, and

Figure 2 is an equivalent circuit of the device in association with a voltage sensor.

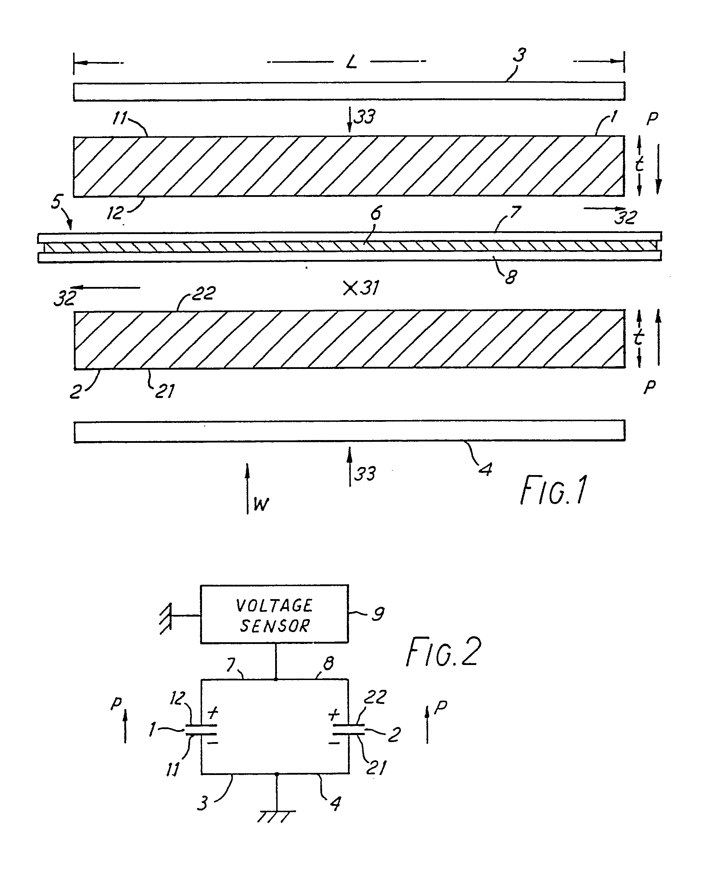

In Figure 2, items equivalent to items of Figure 1 have the same references as in Figure 1.

The device comprises two identical sheets 1 and 2 of polyvinylidene fluoride (PVdF). Each sheet has a thickness $t$ in the range 100 μm to 2000 μm e.g. 500 μm (the sensitivity below 100 μm being too low to be of use), a length L of e.g. 15 cm and a width (i.e. perpendicular to the plane of the drawing) of 1.5 cm, for example.

The major faces 11, 12 and 21, 22 of the sheets 1, 2 are coated with electroless copper or any other suitable electrically conductive coatings.

Identical outer conductive sheets of copper foil 3, 4 having a thickness of e.g. 35 μm are fixed to the outer faces 11, and 21 of the PVdF sheets 1, 2 with neoprene adhesive sufficiently thin to provide a good conductive connection from the copper foil to the electroless copper.

An inner electrode member 5 sandwiched between the sheets 1 and 2 of PVdF comprises a sheet 6 of polytetrafluoroethylene (PTFE), sandwiched between identical sheets of copper 7 and 8. The sheets may be of different thicknesses, respectively 35 μm thick and 17 μm thick, for example.

The sheets of PVdF 1 and 2 are fixed to the copper sheets 7 and 8 by neoprene adhesive sufficiently thin to provide good conductive connection from the copper sheets 7 and 8 to the electroless copper coatings on faces 12 and 22 of the PVdF sheets.

The sheets of PVdF have anisotropic piezoelectric, properties. Three directions (termed 33, 32 and 31) may be defined. The 33 direction in the shown example of Figure 1 is normal, to and facing, the major face 21 or 11 of sheet 2 or 1. The 32 direction lies in the plane of sheet 2 or 1 parallel to the length of the sheet. The 31 direction lies in the plane of the sheet perpendicular to the length (i.e. perpendicular to the plane of the drawing). It will be appreciated that both the 31 and 32 directions are perpendicular to the 33 direction.

The sheets are polarised in known manner so that the material is much more sensitive to pressure in the 33 direction than in the 31 direction and is much more sensitive to pressure in the 31 direction than in the 32 direction. Thus the principal polarisation is in the direction P as indicated by arrows in Figure 1, so that both sheets are poled in the same sense relative to the inner member 5.

The sheets of PVdF may be regarded for the purposes of constructing an equivalent electrical circuit as capacitors, although it should be borne in mind that they are not, in fact, capacitors.

The device of Figure 1 is intended to be connected to a high impedance voltage sensor 9 (e.g. a chart recorder), the circuit being as shown in Figure 2, the sheets 1 and 2 being connected with their capacitances in parallel and poled in the same sense relative to the inner member 5 as indicated by arrows P so that the negative sides 11, 21 are connected to the outer conductive sheets 3 and 4 which are grounded.

The circuit is completed by commonly connecting the inner copper sheets 7 and 8 to the voltage sensor 9, which senses the voltage between sheets 7 and 8 and ground.

The PTFE sheet 6 between the copper sheets 7 and 8, of the inner member 5, ensures that the device is sufficiently stiff or rigid. Said PTFE sheet may, with advantage, be replaced by a sheet of polyester material.

Any flexure of the sheets 1 or 2 will cause (say) sheet 1 to be in tension and sheet 2 to be in compression. This results in the charges on the capacitances 1 and 2 of Figure 2 varying oppositely, so ensuring that the device exhibits a negligible response to such flexure.

Because of the relatively low response of the sheets to stress in the 32 and 31 directions, the sensitivity of the device is relatively low in those directions compared with that in the 33 direction.

A pressure wave propagating in the direction of arrow W in Figure 1 will change the charge of both capacitances 1 and 2 in the same sense, and will thus accumulate, rather than cancel, the nett charge developed across the device.

Various modifications to the described example may be made. For instance each sheet of PVdF 1 or 2 may be replaced by a stack of 2 or more sheets. The PTFE sheet 6 may be replaced by any other suitable plastics sheet. Copper where used may be replaced by any suitable conductor.

## Claims

1. A device sensitive to pressure waves wherein first and second pressure sensitive members (1, 2), each comprising a sheet of polyvinylidene fluoride (pvdf), are supported, in spaced apart relationship, the members (1, 2) being poled in a direction (P) normal to their major surfaces and in the same sense relative to their inwardly facing surfaces; electrical connections (3, 7; 4, 8) are made to respective surfaces of the members (1, 2) and associated circuitry (9) is provided to monitor differences of voltage developed across the major surfaces in response to incident pressure waves, characterised in that the first and second pressure sensitive members (1, 2) are supported on a common substrate (6) of an electrically insulative material, each said sheet of pvdf is at least 100 µm thick, and said electrical connections (3, 7; 4, 8) are effective to cancel substantially differences of voltage developed across said major surfaces as a result of the members (1, 2) flexing and to allow differences of voltage otherwise developed across the major surfaces as a result of pressure waves incident on the members, to be detected.

2. A device according to Claim 1 wherein each said pressure sensitive member (1, 2) comprises a single sheet only of pvdf.

3. A device according to Claim 2 wherein said major surfaces are provided with respective inner and outer sheets (7, 8; 3, 4) of an electrically conductive material, the inner electrically conductive sheets (7, 8) being connected electrically together.

4. A device according to Claim 8 wherein the electrically conductive sheets (7, 8; 3, 4) are of copper and the major surface of said members (1, 2) have coatings of electroless copper.

5. A device according to Claim 3 or Claim 4, wherein the inner sheets have different thicknesses.

6. A device according to Claims 1 to 5, including voltage sensing means (9) for sensing differences of voltage developed across the faces of each said members (1, 2) when pressure waves are incident thereon.

## Patentansprüche

1. Eine für Druckwellen empfindliche Vorrichtung, bei der erste und zweite druckempfindliche Elemente (1, 2), von denen jedes aus einer Folie aus Polyvinyliden-Fluorid (PVDF) besteht, im Abstand voneinander gelagert sind, wobei die Elemente (1, 2) in einer Richtung (P) senkrecht zu ihren Hauptflächen und in gleichem Sinn in bezug auf ihre einwärts weisenden Flächen gepolt sind, und wobei elektrische Verbindungen (3, 7; 4, 8) zu entsprechenden Flächen der Elemente (1, 2) bestehen und ein zugeordneter Schaltungsaufbau (9) vorgesehen ist, um die Unterschiede der über den Hauptflächen in Abhängigkeit von auftreffenden Druckwellen entwickelten Spannung zu überwachen, dadurch gekennzeichnet, daß das erste und das zweite druckempfindliche Element (1, 2) auf einem gemeinsamen Substrat (6) auf elektrisch isolierendem Material gelagert sind, daß jede Folie aus pvdf wenigstens 100 µm dick ist, und daß die genannten elektrischen Verbindungen (3, 7; 4, 8) bewirken, daß nennenswerte Spannungsunterschiede, die über den Hauptflächen als Folge einer Biegung der Elemente (1, 2) entwickelt werden, ausgelöscht werden, während andererseits über den Hauptflächen als Folge von auf die Elemente auftreffenden Druckwellen entwickelte Spannungsunterschiede festgestellt werden.

2. Eine Vorrichtung nach Anspruch 1, bei der jedes der genannten druckempfindlichen Elemente (1, 2) eine einzige Folie nur aus PVDF umfaßt.

3. Eine Vorrichtung nach Anspruch 2, bei der die genannten Hauptflächen mit entspechenden inneren und äußeren Folien (7, 8; 3, 4) aus einem elektrische leitenden Material versehen sind, wobei die inneren elektrisch leitenden Folien (7, 8) miteinander elektrisch verbunden sind.

4. Eine Vorrichtung nach Anspruch 3, bei der die elektrisch leitenden Folien (7, 8; 3, 4) aus Kupfer bestehen und die Hauptflächen der genannten Elemente stromlos aufgebrachte Beschichtungen aus Kupfer aufweisen.

5. Eine Vorrichtung nach Anspruch 3 oder 4, bei der die inneren Folien eine Unterschiedliche Dicke aufweisen.

6. Eine Vorrichtung nach Anspruch 1 bis 5, die spannungsmessende Mittel (9) enthält, um über den Flächen der genannten Elemente Spannungsunterschiede zu messen, wenn auf sie Druckwellen auftreffen.

## Revendications

1. Un dispositif sensible à des ondes de pression dans lequel un premier et un second élément (1, 2), sensibles à une pression, comprenant chacune une feuille de fluorure de polyvinylène (PVdF), sont supportés, dans une relation d'espacement mutuel, les éléments (1, 2) étant polarisés dans une direction (P) perpendiculaire à leurs grandes faces et dans le même sens par rapport à leurs surfaces dirigées ver l'intérieur; des connexions électriques (3, 7; 4, 8) sont établies avec des surfaces respectives des éléments (1, 2) et un circuit associé (9) est prévu pour contrôler les différences de tension engendrées entre les grandes faces en réponse à des ondes de pression incidentes, caractérisé en ce que les premier et second éléments (sensibles à une pression (1, 2) sont supportés sur un substrat commun (6) constitué d'un matériau électriquement isolant, chacune desdites feuilles en PVdF a une épaisseur d'au moins 100 µm, et lesdites connexions électriques (3, 7; 4, 8) agissent de façon à compenser pratiquement des différences de tension engendrées entre lesdites grandes faces par suite d'une flexion des éléments (1, 2) et à permettre une détection de différences de tension autrement engendrées entre les grandes faces par suite de l'incidence d'ondes de pression sur les éléments.

2. Un dispositif selon la revendication 1, dans lequel chacun desdits éléments (1, 2) sensibles à une pression comprend seulement une feuille de PVdF.

3. Un dispositif selon la revendication 2, dans lequel lesdites grandes faces sont pourvues de feuilles intérieure et extérieure respectives (7, 8; 3, 4) formées d'un matériau électriquement conducteur, les feuilles intérieures et électriquement conductrices (7, 8) étant reliées électriquement ensemble.

4. Un dispositif selon la revendication 8, dans lequel les feuilles électriquement conductrices (7, 8; 3, 4) sont formées de cuivre et les grandes faces desdits éléments (1, 2) comportent des revêtements en cuivre non-électrolytique.

5. Un dispositif selon la revendication 3 ou la revendication 4, dans lequel les feuilles intérieures ont des épaisseurs différentes.

6. Un dispositif selon la revendications 1 à 5, comprenant un moyen de détection de tension (9) pour détecter des différences de tension engendrées entre les faces de chacun desdits éléments (1, 2) lors de l'incidence d'ondes de pression.

FIG.1

VOLTAGE SENSOR

FIG.2

1